Europäisches Patentamt

European Patent Office

Office européen des brevets

(11) Numéro de publication : **0 385 852 B1**

(12) # FASCICULE DE BREVET EUROPEEN

(45) Date de publication du fascicule du brevet :
06.09.95 Bulletin 95/36

(51) Int. Cl.⁶ : **G01S 5/16,** G01S 5/00, G01S 3/78, H04N 5/14

(21) Numéro de dépôt : **90400541.0**

(22) Date de dépôt : **27.02.90**

(54) **Dispositif de restitution de mouvement rapide par observation de mire rétroréfléchissante et procédé pour la mise en oeuvre du dispositif.**

(30) Priorité : **28.02.89 FR 8902562**

(43) Date de publication de la demande :
**05.09.90 Bulletin 90/36**

(45) Mention de la délivrance du brevet :
**06.09.95 Bulletin 95/36**

(84) Etats contractants désignés :
**DE GB IT**

(56) Documents cités :
**EP-A- 0 261 091**
**GB-A- 1 485 619**
**GB-A- 2 018 422**

(73) Titulaire : **AEROSPATIALE Société Nationale Industrielle**
**37, Boulevard de Montmorency**
**F-75781 Paris Cédex 16 (FR)**

(72) Inventeur : **Deniau, Patrice**
**56 Côte de Narbonne**
**F-78480 Verneuil (FR)**
Inventeur : **Hadet, Christian**
**84,rue Jean Jaurès**
**F-95320 St Leu la Forêt (FR)**
Inventeur : **Laffitte, Olivier**
**22 rue Emile Dubois**
**F-75124 Paris (FR)**
Inventeur : **Devars, Jean**
**39 rue Corot**
**F-91140 Villebon Sur Yvette (FR)**

(74) Mandataire : **Dubois-Chabert, Guy et al**
**Société de Protection des Inventions**
**25, rue de Ponthieu**
**F-75008 Paris (FR)**

EP 0 385 852 B1

## Description

La présente invention a pour objet un dispositif de restitution de mouvement rapide par observation de mire rétroréfléchissante et procédé pour la mise en oeuvre du dispositif. Elle s'applique notamment à l'observation en temps réel du largage de propulseur, de booster ou autre à partir d'un lanceur en vol.

La restitution, en temps réel, du mouvement relatif de sous-ensembles constitutifs d'un lanceur au cours de leur largage autorise le contrôle du bon déroulement des opérations. La connaissance des marges de déboîtement et des pertubations cinématiques communiquées au corps largué conditionne la mission, les performances et la qualification des systèmes lanceurs. Il s'agit donc de déterminer, à l'aide d'un équipement embarqué la trajectoire et l'attitude du corps largué.

Les informations recueillies au cours du largage sont transmises au sol par télémesure ou stockées à bord sur un dispositif d'enregistrement récupéré au sol à l'issue du tir.

Pour des raisons techniques (poids, volume, ...) ou de coûts, les sous-ensembles largués ne sont pas instrumentés.

De manière connue, on utilise l'observation optique des sous ensembles largués par des caméras cinématographiques. Cette manière d'opérer présente de nombreux inconvénients : la récupération du film sur lequel les informations ont été enregistrées n'est pas toujours possible ; d'autre part, la caméra présente un encombrement important, grave défaut pour un système embarqué. Enfin, ce dispositif n'est pas fiable, le taux d'échec lors des essais effectués étant de 50 %.

On connaît d'autres types de dispositifs de mesures directes de distances utilisant des fils reliant le sous ensemble largué au lanceur. Un système de tiges coulissantes permet aussi de déterminer la vitesse et la distance du corps largué. Si ces dispositifs ne nécessitent pas de récupération au sol et si d'autre part la quantité d'informations à transmettre est réduite et compatible avec la capacité limitée des liaisons télémesures, ils présentent l'inconvénient majeur de ne délivrer qu'une information partielle. L'utilisation de capteurs de déplacement avec contact peut en outre induire des perturbations sur le phénomène à observer.

On connaît d'autres dispositifs où une caméra vidéo remplace la caméra cinématographique. Mais les images, transmises analogiquement sur un canal HF, manquent de précision. Le mauvais rapport signal/bruit, les vacillements interdisent toute mesure précise du mouvement du corps largué. C'est par exemple le cas du dispositif décrit dans le document GB-A-1 485 619.

Un autre dispositif utilisant une caméra vidéo est décrit dans le document EP-A-0 261 091. Toutefois, dans ce dispositif, la caméra est solidaire d'une station fixe et ne présente aucun mouvement relatif par rapport à un objet largué, comme c'est le cas pour un lanceur en vol qui largue un propulseur.

La présente invention pallie ces divers inconvénients. Elle préconise l'utilisation d'une caméra vidéo embarquée sur le lanceur observant une mire placée sur le corps largué éclairée par une lampe à éclats synchronisée sur la prise de vue. Le signal vidéo est numérisé et traité de manière à ne transmettre, par l'intermédiaire d'un canal de transmission de bas débit, que l'information utile à la mesure : l'image est réduite à ses contours avant d'être transmise.

La présente invention dispense de la récupération des corps largués mais aussi du corps principal : la transmission des informations est effectuée au fur et à mesure de leur enregistrement.

L'invention ne nécessite aucun contact mécanique entre les corps lors du largage puisque la détection est optique. On évite ainsi tout risque de perturbation du corps largué par le système de détection.

De façon plus précise, l'invention concerne un dispositif de restitution de mouvement relatif d'un premier corps par rapport à un second corps, ce dispositif comportant :

- une caméra vidéo (20) portée par le deuxième corps, pointée vers le premier corps et délivrant sur une sortie un signal vidéo et un signal de synchronisation, caractérisé par le fait qu'il comporte en outre :
- au moins une mire constituée de motifs géométriques à contour rectiligne alternativement réfléchissant et absorbant la lumière,
- une caméra vidéo délivrant sur une sortie un signal vidéo et un signal de synchronisation,
- une lampe à éclats,
- un circuit électronique de déclenchement de la lampe à éclats, ce circuit délivrant un signal de déclenchement sur une sortie reliée à des bornes de la lampe à éclats,
- un boîtier électronique de traitement du signal vidéo relié par une entrée à la sortie de la caméra vidéo, ce boîtier assure une conversion analogique/numérique, une compression et un codage du signal vidéo et délivre un signal codé sur une première sortie, d'autre part, ce boîtier délivre un signal de commande sur une sortie reliée à une entrée du circuit électronique de déclenchement,
- des moyens pour analyser, traiter et visualiser le signal codé transmis, ces moyens étant reliés par une entrée à une sortie des moyens de transmission.

La présente invention concerne aussi un procédé de restitution de mouvement relatif d'un premier corps

2

par rapport à un second corps mettant en oeuvre du dispositif selon la revendication 1 consistant à embarquer sur le deuxième corps une caméra vidéo pointée vers le premier corps et délivrant sur une sortie un signal vidéo et un signal de synchronisation,

caractérisé par le fait qu'il consiste en outre:

- à embarquer sur le premier corps au moins une mire constituée de motifs géométriques à contour rectiligne alternativement réfléchissant et absorbant la lumière,
- à embarquer sur le deuxième corps une lampe à éclats,
- à pourvoir un circuit électronique de déclenchement de la lampe à éclats, ce circuit recevant ledit signal de synchronisation et délivrant sur une sortie reliée à des bornes de la lampe à éclats , un signal de déclenchement de cette lampe,
- à pourvoir un boîtier électronique de traitement du signal vidéo relié par une entrée à la sortie de la caméra vidéo, ce boîtier assurant une conversion analogique/numérique, une compression et un codage du signal vidéo et délivrant un signal codé sur une première sortie et délivrant un signal de commande sur une sortie reliée à une entrée du circuit électronique de déclenchement,
- à pourvoir des moyens de transmission du signal codé reliés par une entrée à la première sortie du boîtier électronique de traitement,
- et à pourvoir des moyens pour analyser, traiter et visualiser le signal codé transmis, reliés par une entrée à une sortie des moyens de transmission.

Les caractéristiques et avantages de l'invention apparaîtront mieux après la description qui suit donnée à titre explicatif et nullement limitatif. Cette description se réfère à des dessins annexés sur lesquels :

- la figure 1 représente schématiquement un dispositif selon l'invention,
- la figure 2 représente un schéma synoptique des étapes du traitement que subit un signal vidéo lors d'un procédé selon l'invention,
- la figure 3 représente un schéma synoptique d'étapes réalisant une extraction des contours d'une image vidéo,
- la figure 4 représente un schéma synoptique d'un mode de réalisation d'un lissage,
- la figure 5 représente schématiquement un découpage en domaines effectué autour d'un pixel lors d'une opération de lissage,
- la figure 6 représente schématiquement un découpage utilisé lors d'un calcul de gradient,
- la figure 7 représente schématiquement une allure de la loi de variation du seuil en fonction du niveau moyen d'éclairement, et
- la figure 8 représente schématiquement un mode de réalisation des moyens de transmission.

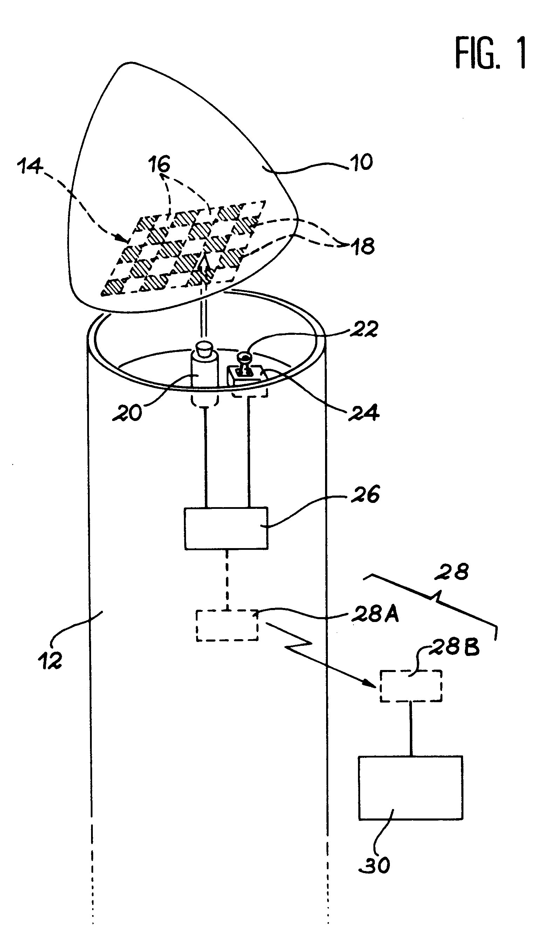

La figure 1 représente schématiquement un dispositif selon l'invention. Le corps largué 10 peut être la coiffe d'un lanceur 12 par exemple. A l'intérieur de la coiffe 10, on a placé une mire 14 en damier, dont les motifs, alternativement, réfléchissent (motifs référencés 16) et absorbent (motifs référencés 18) la lumière. De manière préférée, les motifs réfléchissants sont constitués de papier rétroréfléchissant, du papier du type "Scotch Light A. C. 8850" fabriqué par la Société 3M, par exemple. Sur la figure 1, une seule mire 14 est représentée, mais il va de soi que plusieurs mires peuvent être disposées sur le corps largué 10.

Une caméra vidéo 20 est fixée sur le lanceur 12 de manière à avoir la mire 14 dans son champ d'observation. Cette caméra 20 est placée dans un boîtier étanche et résistant mécaniquement. Préférentiellement, cette caméra 20 est d'encombrement et de poids les plus faibles possibles. La caméra 20 possède une matrice d'éléments photosensibles à transfert de charges (Coupled Charge Device en terminologie anglosaxonne), ce qui lui confère une grande sensibilité et une dynamique de plusieurs milliers. Chaque élément photosensible correspond à un pixel ; les pixels sont réunis en lignes successivement paires et impaires. L'ensemble des lignes paires, respectivement impaires, correspond à une trame paire, respectivement impaire. Vingt cinq images sont formées toutes les secondes, ce qui correspond donc à cinquante trames par seconde. Chaque image est formée pendant une durée égale à 2 ms par exemple.

La caméra vidéo 20 délivre sur une sortie un signal vidéo analogique et un signal de synchronisation.

Une lampe à éclats 22 reliée par ses bornes à une sortie d'un circuit électronique de déclenchement 24 est fixée à proximité de la caméra 20. Pour un bon fonctionnement du dispositif, la lampe à éclats est placée le plus près possible de la caméra 20 ; leur éloignement est dû à leur encombrement respectif. Chaque éclair de la lampe à éclats 22 a une durée comprise entre 0,1 et 0,5 ms par exemple.

Lors du largage de la coiffe 10, la lampe à éclats 22 éclaire la mire 14 par intermittence. Chaque éclair lumineux est synchronisé avec la formation d'une image par la caméra 20. La brièveté des éclairs permet d'éviter les "bougés" lors de la prise de vue. C'est pour la même raison que le temps d'exposition de la caméra 20 est réduit à 2 ms. Au fur et à mesure que l'objet largué s'éloigne du lanceur, la mire 14 reçoit de moins en moins de lumière de la part de la lampe 22. L'usage de papier rétroréfléchissant permet de conserver une luminance de la mire 14 sensiblement constante malgré l'éloignement.

L'enregistement du largage n'est utile que pendant moins d'une seconde (environ 700 ms, durée approximative pendant laquelle le corps largué 10 est dans le champ d'observation de la caméra). C'est pour cela qu'on parle de mouvement rapide : la mesure n'est effectuée que sur quelques dizaines d'images toutes très différentes, à partir desquelles le mouvement relatif du corps largué par rapport au lanceur doit être reconstitué.

La sortie de la caméra 20 est connectée à une entrée d'un boîtier électronique 26. Ce boîtier 26 est relié par une sortie à une entrée du circuit de déclenchement 24 de la lampe à éclats 22. Le boîtier 26 délivre sur cette sortie un signal de commande du circuit de déclenchement 24 qui synchronise l'émission d'éclairs par la lampe à éclats 22 sur les prises de vue de la caméra 20 : la lampe à éclats 22 et son circuit de déclenchement 24 forment un flash synchronisé avec la caméra 20.

Le boîtier électronique 26 assure le traitement du signal vidéo : conversion analogique/numérique, compression puis codage.

Par la simple conversion analogique/numérique du signal vidéo, on obtient un signal numérique dont le débit est de 50 Mbits/s. Une compression et un codage sont donc nécessaires pour pouvoir adapter le débit du signal à transmettre à la capacité du canal de transmission utilisé. On peut comprimer et coder le signal vidéo numérique de manière à pouvoir le transmettre à un débit inférieur à 500 kbits/s par exemple.

Une compression et un codage du type de ceux utilisés par la télévision domestique sont inutilisables puisque ces derniers ne transmettent que les différences entre images successives en jouant sur le fait que celles-ci varient peu de l'une à l'autre. Cette technique ne permet que la restitution de mouvements lents. Dans la restitution de mouvements rapides, chaque image est complètement différente de la suivante.

Un lanceur ne peut transmettre que quelques Mbits/s au total. Les informations à transmettre sont nombreuses et on alloue un certain débit à chaque type d'information. Pour la mesure du mouvement relatif des objets largués par rapport au lanceur, on dispose d'un canal de transmission bas débit, de 400 kbits/s par exemple.

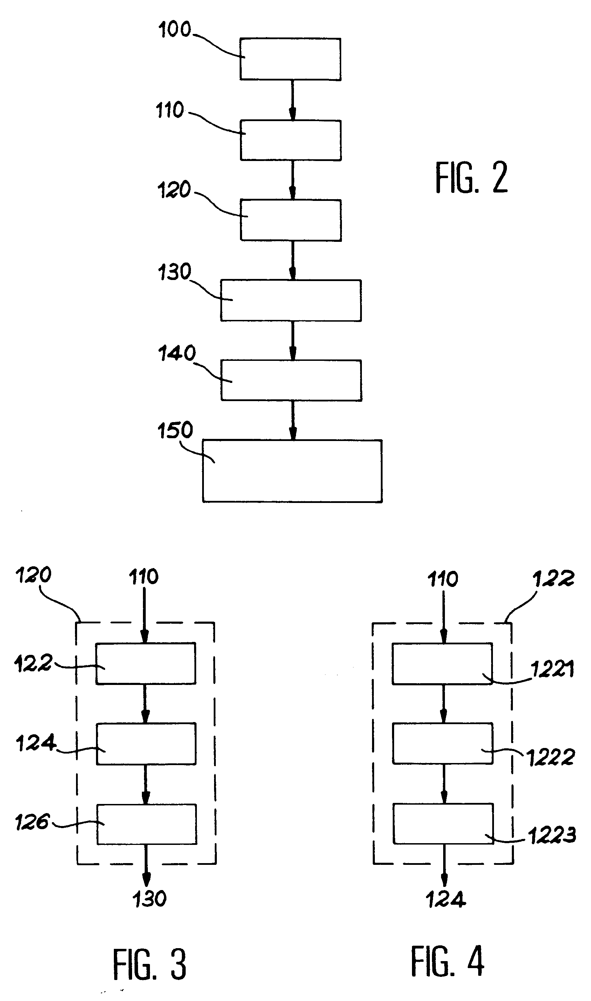

La figure 2 représente un schéma synoptique des étapes de traitement que subit un signal vidéo lors d'un procédé selon l'invention.

Chaque rectangle représente une étape.

Le rectangle référencé 100 symbolise la prise de vue : le signal vidéo est alors délivré par la caméra 20 ;

le rectangle référencé 110 symbolise une étape de conversion analogique/numérique effectuée en même temps qu'un échantillonnage ;

le rectangle référencé 120 symbolise une étape d'extraction des contours des images enregistrées par la caméra 20 ;

le rectangle référencé 130 symbolise un codage du signal correspondant aux contours extraits ;

le rectangle référencé 140 représente la transmission du signal codé sur un canal bas débit ;

le rectangle référencé 150 représente l'étape de reconstitution des images, de mesure des mouvements relatifs et de visualisation.

La figure 3 représente un schéma synoptique d'étapes réalisant une extraction des contours.

Le rectangle référencé 122 représente un lissage du signal vidéo numérique ;

le rectangle référencé 124 représente un calcul de gradient entre les niveaux de gris des différents pixels ;

le rectangle référencé 126 symbolise une étape dite de "seuillage" où on affecte un niveau "1" à chaque pixel dont le gradient précédemment calculé est supérieur à un seuil donné et un niveau "0" sinon.

Une description plus détaillée des différentes étapes citées précédememnt est donnée ci-après.

De manière préférée, lors de la conversion analogique/numérique, on échantillonne le signal vidéo de manière à ne conserver qu'une trame sur deux et qu'un pixel sur deux, ce qui constitue une compression préliminaire (étape 110, figure 2).

Le signal vidéo numérique obtenu contient des valeurs numériques représentant des états d'éclairements des pixels. La compression proprement dite consiste à extraire les contours (étape 120, figure 2) des images formées par la caméra 20.

De manière préférée, l'extraction des contours est réalisée en trois étapes successives (figure 3). On effectue d'abord un lissage (étape 122, figure 3) du signal vidéo numérique.

La figure 4 représente un schéma synoptique des étapes d'un mode de réalisation d'un lissage.

Le rectangle référencé 1221 symbolise un calcul d'étendue ;

le rectangle référencé 1222 symbolise un calcul de moyenne ;

le rectangle référencé 1223 symbolise une affectation pour un pixel d'une nouvelle valeur numérique (en fait, la moyenne précédemment calculée) remplaçant la valeur numérique représentant l'état d'éclairement (niveau de gris) de ce pixel.

Un commentaire plus détaillé de cette opération de lissage est donné ci-après.

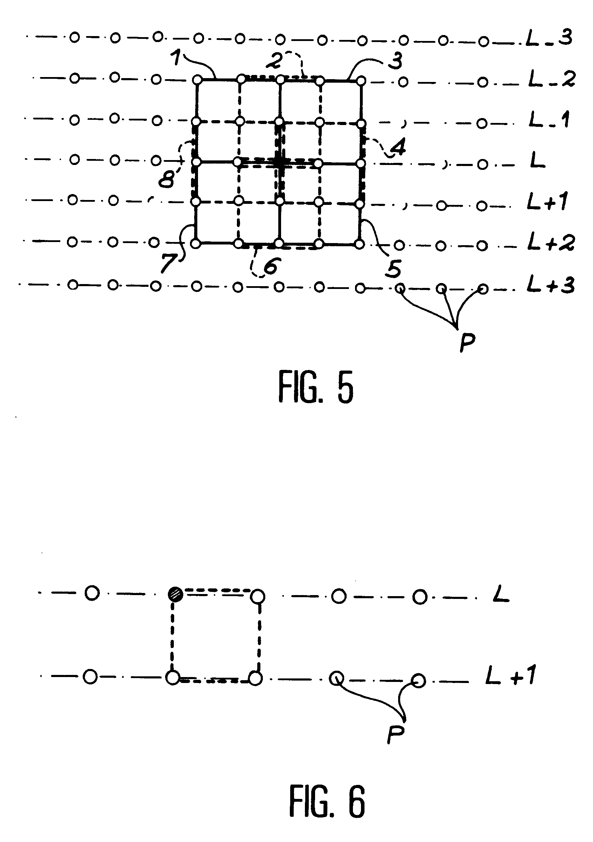

La figure 5 représente schématiquement un découpage en domaines effectué autour d'un pixel lors d'une opération de lissage. On a représenté sept lignes d'une trame, référencées de L-3 à L+3. Les cercles symbolisent les pixels référencés p. Le pixel considéré, pour lequel on effectue le lissage, est représenté en noir sur la ligne référencée L.

De manière préférée, pour effectuer le lissage, on décompose le voisinage 5 x 5 (c'est-à-dire le carré de cinq pixels de côté et ayant le pixel considéré pour centre) en neuf domaines carrés de trois pixels de coté. Le calcul n'est pas effectué pour le domaine contenant le pixel considéré (pixel noir sur la figure) en son centre. Les autres domaines sont numérotés de 1 à 8.

Le lissage consiste à calculer l'étendue (étape 1221, figure 4) de chacun de ces huit domaines. L'étendue est égale à la différence entre la plus grande et la plus petite des valeurs numériques représentant l'état d'éclairement (niveau de gris) des pixels du domaine considéré.

Pour le domaine de plus faible étendue, on calcule la moyenne (étape 1222, figure 4) des valeurs numériques représentant l'état des pixels. On remplace la valeur numérique représentant l'état d'éclairement du pixel considéré par cette moyenne (étape 1223, figure 4).

Ce mode de réalisation du lissage est aisément séquentialisable à la condition de disposer dans le boîtier de traitement 26 (figure 1) d'une mémoire tampon (non représentée) permettant de mémoriser la suite des informations correspondant à deux lignes d'une trame.

Usuellement, dans les compressions on utilise un filtrage linéaire et non un lissage. Le lissage, tout en améliorant le rapport signal/bruit, permet d'éliminer les valeurs numériques aberrantes. De plus, le lissage permet d'affiner les contours des images enregistrées.

Après l'opération de lissage, on effectue un calcul de gradient (étape 124, figure 3) entre la valeur numérique représentant l'état du pixel considéré et les valeurs numériques représentant l'état des pixels voisins.

La figure 6 représente schématiquement un découpage utilisé lors d'un calcul de gradient. Les références et les symboles sont identiques à ceux utilisés figure 5.

De manière préférée, le gradient est calculé sur un voisinage 2 x 2 ; c'est-à-dire le carré de deux pixels de côté et ayant le pixel considéré pour le calcul dans l'angle supérieur gauche du carré.

Après le calcul du gradient, on effectue une opération dite de "seuillage" (étape 125, figure 3).

Cette opération consiste à augmenter le contraste des images enregistrées par la caméra 20 (figure 1) de manière à ne retenir que leurs contours.

Lors du largage d'un corps à partir d'un lanceur, les images enregistrées ne représentent pratiquement que le seul damier de la mire 14. Au fur et à mesure que le corps s'éloigne du lanceur, la mire 14 occupe une surface de moins en moins importante sur les images enregistrées. L'opération d'extraction des contours et principalement le "seuillage " permettent d'éliminer des images d'une partie des objets parasites entrés dans le champ de la caméra 20 au cours de l'éloignement du corps largué.

L'opération de "seuillage" permet, pour chaque pixel, de passer d'une information codée sur 8 bits, la valeur numérique représentant l'état d'éclairement (niveau de gris), à une information codée sur 1 bit ; cette information est l'appartenance ou non d'un pixel à un contour.

Le "seuillage" consiste à affecter un niveau "1" à chaque pixel dont le gradient précédemment calculé (étape 124, figure 3) est supérieur à un seuil donné ; on affecte un niveau "0" sinon.

La valeur choisie pour le seuil détermine le nombre de points identifiés comme contour.

Pour choisir la valeur du seuil, trois critères sont à considérer :

- dans les zones d'éclairement uniforme des images enregistrées par la caméra 20, les points parasites d'éclairement moindre dûs au bruit de la matrice d'éléments photosensibles ou des autres circuits électroniques ne doivent pas être pris en compte comme appartenant à un contour. Ce critère impose une valeur minimale pour le seuil.

- La détection des transitions de faible à forte réflectance (comme c'est le cas pour la mire 14) doit être assurée, quel que soit le niveau d'éclairement de l'image enregistrée. Suivant ce critère, la valeur du seuil choisie dépend du codage adopté lors de la conversion analogique/numérique (étape 110, figure 2), un écart de réflectance se traduisant par un rapport constant de niveau pour le signal vidéo lorsque l'éclairement varie.

- Les contours des objets (autres que la mire 14) entrant dans le champ de la caméra 20 doivent être détectés. Ce critère, pour être satisfait impose une valeur de seuil la plus basse possible.

Pour conserver la bonne dynamique de la matrice d'éléments photosensibles à transfert de charges, et pour satisfaire au mieux les trois critères précédents on adopte, par exemple, une valeur de seuil dépendant du niveau moyen d'éclairement de chaque trame. Ce niveau moyen est déterminé après l'étape 122 (figure 3) de lissage effectué sur chaque pixel.

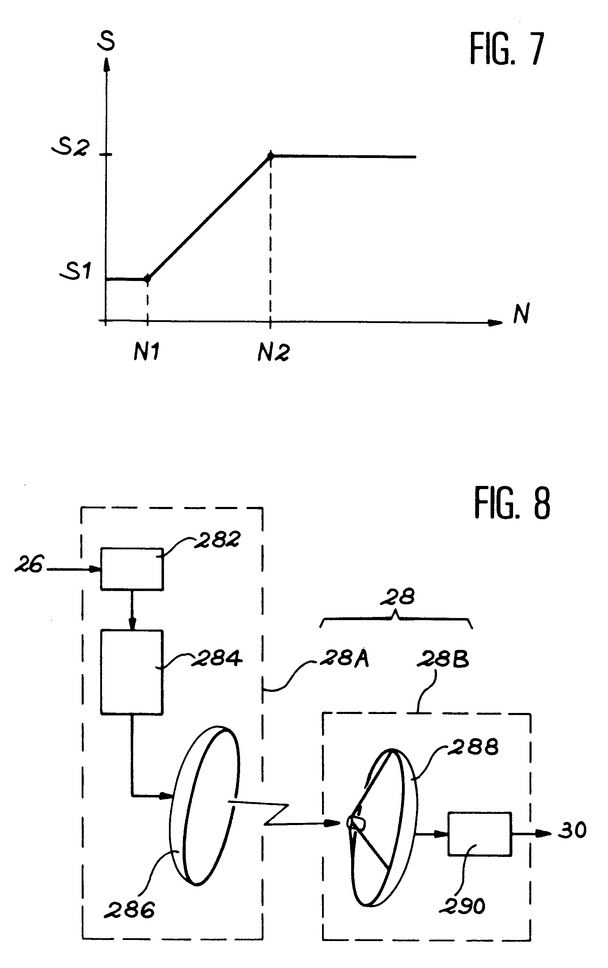

La figure 7 représente schématiquement une allure de la loi de variation du seuil S en fonction du niveau moyen d'éclairement N.

Pour les valeurs de N inférieures à une valeur N1, le seuil S est constant à la valeur S1.

Entre les valeurs N1 et N2 de N, le seuil S croît linéairement jusqu'à une valeur S2.

Pour les valeurs de N supérieures à N2, le seuil S est constant à la valeur S2.

A la fin de l'extraction de contours, chaque trame enregistrée est représentée par un tableau de bits ayant la valeur "0" ou "1" selon que les pixels appartiennent ou non à un contour.

Pour permettre la transmission par un canal bas débit, le signal représentant les contours est codé (étape 130, figure 2). Sur les tableaux de "0" et de "1" représentant les contours des images, chaque pixel affecté du niveau "1" est séparé du pixel affecté du niveau "1" suivant par un certain nombre de pixels affectés du niveau "0".

Le codage (étape 130, figure 2) consiste à remplacer la suite des pixels affectés de leur niveau respectif par une suite des longueurs des plages de pixels de niveau "0" séparant deux pixels de niveau "1". On code donc, le long de chaque ligne, le nombre de pixels de niveau "0" entre deux points de contour successifs.

Les longueurs à coder ne sont pas équiprobables : la mire 14 présente des motifs géométriques à contour régulier, en damier par exemple. De ce fait, la longueur la plus fréquente est la longueur nulle puisque les contours sont continus. La seconde longueur la plus fréquente est la longueur maximum que l'on puisse coder.

De manière préférée, on code les longueurs nulles sur 1 bit et les longueurs maximales sur 2 bits. Les autres longueurs sont codées sur 8 bits : 2 bits de différenciation et 6 bits pour la longueur proprement dite.

Le signal de synchronisation de trame délivré par la caméra 20 est codé quant à lui sur 8 bits par exemple.

Le tableau suivant résume un exemple de code possible ; toutes les suites de pixels de niveau "0" (plages) supérieurs à 63 sont codées sur 2 bits.

| Longueur de plage | Nombre de bits | Code |
|---|---|---|
| 0 | 1 | 1 |
| 1 - 63 | 2 + 6 | 01 xxxxxx |
| > 63 | 2 | 00 |
| Synchro | 8 | 01 000000 |

En cas de dépassement du nombre de bits alloué à chaque image, on peut simplement arrêter le codage et abandonner l'exploration de l'image par exemple. Dans ce cas, la partie du champ optique correspondante est perdue. Pour pallier cet inconvénient, on oriente la caméra 20 de sorte que la partie utile du champ (mire 14) soit explorée en premier.

Le signal ainsi codé est ensuite transmis (étape 140, figure 2) grâce aux moyens de transmission 28 (figure 1).

La figure 8 représente schématiquement un mode de réalisation des moyens de transmission. Les moyens de transmission 28 comportent des moyens d'émission 28A sur le lanceur 12. Ces moyens 28A comprennent un circuit électronique 282 de mise en forme et de modulation du signal codé. Ce circuit 282 délivre sur une sortie un signal apte à être transmis au moyen d'une onde radiofréquence. Ce circuit 282 assure éventuellement le multiplexage du signal vidéo avec d'autres signaux provenant d'autres capteurs. Un tel circuit 282 est aussi couramment appelé "unité centrale différée d'acquisition" (UCDA). De tels circuits 282 sont fabriqués par la société Intertechnique, par exemple.

Un émetteur 284 est relié par une entrée à la sortie du circuit électronique 282. Cet émetteur 284 est terminé par un réseau d'antennes 286, du type antenne de peau omnidirectionnelle (une seule antenne est représentée sur la figure 8). Le signal codé est donc émis, porté par une onde radiofréquence.

Une station au sol par exemple, peut capter cette émission. Les moyens de transmission 28 comprennent des moyens de réception 28B comportant au moins une antenne 288 et un circuit électronique 290 de démodulation (et aussi éventuellement de démultiplexage).

Après la transmission, l'étape suivante est une étape de reconstitution, de mesure, et de visualisation (étape 150, figure 2). Celle-ci est réalisée trâce à des moyens 30 (figure 1) pour analyser, traiter et visualiser le signal codé transmis. Ces moyens 30 sont reliés par une entrée à une sortie des moyens de transmission 28.

Les moyens 30 pour analyser, traiter et visualiser le signal peuvent être un ordinateur muni d'un moniteur et d'une imprimante par exemple.

La reconstitution (étape 150, figure 2) permet de reconstituer le tableau des points de contour : le signal codé transmis est décodé par une fonction inverse du codage.

A cette étape, le résultat peut se présenter sous forme graphique. A partir de cette dernière, il est aussi possible de réaliser des images de synthèse en couleur (alors que la prise de vue initiale est en noir et blanc). Ces images de synthèse peuvent former un film à usage médiatique par exemple.

La mesure (étape 150, figure 2) fait partie du traitement que subissent les images de contours analysées.

Elle consiste à repérer des points caractéristiques sur la mire 14 (intersections des positions rectilignes des contours par exemple) ; puis on reconstruit, par le calcul, la position dans l'espace du corps largué par rapport au lanceur. Ce calcul est effectué grâce à la connaissance des caractéristiques dimensionnelles exactes déduites de l'ensemble des points caractéristiques trouvés.

Ainsi grâce à ce dispositif et au procédé pour sa mise en oeuvre, on peut déduire le mouvement relatif (mouvement du centre de gravité et mouvements angulaires) d'un corps par rapport à un autre. Ce dispositif est particulièrement bien adapté à la reconstitution de mouvements rapides (par rapport à la détection effectuée au rythme de 25 images par seconde).

Bien entendu, l'invention ne se limite nullement aux exemples de réalisation plus spécialement décrits et représentés ; elle admet au contraire toutes les variantes. En particulier d'autres types d'algorithmes peuvent être utilisés pour réaliser l'extraction des contours et le codage. Le codage par exemple peut utiliser d'autres données statistiques que la longueur des plages de niveau "0" entre deux pixels de niveau "1".

L'invention permet d'observer le mouvement d'un corps se séparant d'un autre corps : par exemple, le largage de la coiffe d'un lanceur, mais aussi le largage des étages d'accélération à poudre d'un lanceur ou encore le largage d'avion spatial à partir d'un lanceur. Mais l'invention s'applique aussi à la télémanipulation, à la robotique spatiale ou à la télésurveillance de processus.

**Revendications**

1. Dispositif de restitution de mouvement relatif d'un premier corps (10) par rapport à un second corps (12), comportant :
   - une caméra vidéo (20) portée par le deuxième corps, pointée vers le premier corps et délivrant sur une sortie un signal vidéo et un signal de synchronisation, caractérisé par le fait qu'il comporte en outre :
   - au moins une mire (14) portée par le premier corps et constituée de motifs géométriques à contour rectiligne alternativement réfléchissant (16) et absorbant (18) la lumière,
   - une lampe à éclats (22), portée par le deuxième corps,
   - un circuit électronique de déclenchement (24) de la lampe à éclats (22), ce circuit (24) recevant ledit signal de synchronisation et délivrant sur une sortie reliée à des bornes de la lampe à éclats (22), un signal de déclenchement de cette lampe,
   - un boîtier électronique de traitement (26) du signal vidéo relié par une entrée à la sortie de la caméra vidéo (20), ce boîtier (26) assurant une conversion analogique/numérique, une compression et un codage du signal vidéo et délivrant un signal codé sur une première sortie et délivrant un signal de commande sur une sortie reliée à une entrée du circuit électronique de déclenchement (24),
   - des moyens de transmission (28) du signal codé reliés par une entrée à la première sortie du boîtier électronique de traitement (26),
   - des moyens (30) pour analyser, traiter et visualiser le signal codé transmis, reliés par une entrée à une sortie des moyens de transmission (28).

2. Dispositif selon la revendication 1, caractérisé en ce que le signal numérique est comprimé et codé de manière à pouvoir être transmis à un débit inférieur à 500 kbits/s.

3. Dispositif selon la revendication 2, caractérisé en ce que le signal numérique est comprimé et codé de manière à pouvoir être transmis à un débit égal à 400 kbits/s.

4. Dispositif selon la revendication 1, caractérisé en ce que la mire (14) est en damier.

5. Dispositif selon la revendication 1, caractérisé en ce que les motifs réfléchissants (16) sont réalisés avec du papier rétroréfléchissant.

**6.** Dispositif selon la revendication 1, caractérisé en ce que les moyens de transmission (28) comportent :
- des moyens d'émission (28A) comprenant :
  - un circuit électronique de mise en forme et de modulation (282) du signal codé, ce circuit (282) délivrant sur une sortie un signal apte à être transmis au moyen d'une onde radiofréquence,
  - un émetteur (284) relié par une entrée à la sortie du circuit électronique de mise en forme et de modulation (282) et comprenant un réseau d'antennes (286),
  - des moyens de réception (28B) comprenant au moins une antenne (288) et un circuit électronique de démodulation (290).

**7.** Dispositif selon la revendication 1, la caméra délivrant un signal vidéo correspondant à des trames de lignes, les lignes étant constituées de pixels, caractérisé en ce que le boîtier électronique de traitement (26) du signal vidéo assure en même temps que la conversion analogique/numérique, un échantillonnage dudit signal, échantillonnage ne conservant qu'une trame sur deux et qu'un pixel sur deux.

**8.** Dispositif selon la revendication 1, caractérisé en ce que la lampe à éclats (22) est placée à proximité de la caméra vidéo (20).

**9.** Procédé de restitution de mouvement relatif d'un premier corps (10) par rapport à un second corps (12) mettant en oeuvre du dispositif selon la revendication 1 consistant à embarquer sur le deuxième corps (12) une caméra vidéo (20) pointée vers le premier corps (10) et délivrant sur une sortie un signal vidéo et un signal de synchronisation,
caractérisé par le fait qu'il consiste en outre:
- à embarquer sur le premier corps (10) au moins une mire (14) constituée de motifs géométriques à contour rectiligne alternativement réfléchissant (16) et absorbant (18) la lumière,
- à embarquer sur le deuxième corps (12) une lampe à éclats (22),
- à pourvoir un circuit électronique de déclenchement (24) de la lampe à éclats (22), ce circuit (24) recevant ledit signal de synchronisation et délivrant sur une sortie reliée à des bornes de la lampe à éclats (22), un signal de déclenchement de cette lampe,
- à pourvoir un boîtier électronique de traitement (26) dù signal vidéo relié par une entrée à la sortie de la caméra vidéo (20), ce boîtier (26) assurant une conversion analogique/numérique, une compression et un codage du signal vidéo et délivrant un signal codé sur une première sortie et délivrant un signal de commande sur une sortie reliée à une entrée du circuit électronique de déclenchement (24),
- à pourvoir des moyens de transmission (28) du signal codé reliés par une entrée à la première sortie du boîtier électronique de traitement (26),
- et à pourvoir des moyens (30) pour analyser, traiter et visualiser le signal codé transmis, reliés par une entrée à une sortie des moyens de transmission (28).

**10.** Procédé selon la revendication 9, caractérisé en ce que la compression consiste à extraire en temps réel, des contours des images formées par la caméra vidéo (20).

**11.** Procédé selon la revendication 9, dans lequel le signal vidéo correspond à des trames de lignes, les lignes étant constituées de pixels, le signal vidéo après sa numérisation contenant des valeurs numériques représentant des états d'éclairement, c'est-à-dire des niveaux de gris des pixels, caractérisé en ce que la compression du signal vidéo numérique consiste à :
- effectuer un lissage (122) du signal vidéo,
- pour chaque pixel calculer un gradient (124) entre la valeur numérique représentant l'état du pixel considéré et les valeurs numériques représentant l'état des pixels voisins,
- affecter un niveau "1" à chaque pixel dont le gradient précédemment calculé est supérieur à un seuil donné et un niveau "0" sinon, et en ce que le signal vidéo contenant une suite de pixels affectés de leur niveau respectif, une.plage de pixels de niveau "0" séparant deux pixels de niveau "1", le codage consiste à remplacer la suite de pixels affectés de leur niveau respectif par une suite des longueurs des plages de pixels de niveau "0" séparant deux pixels de niveau "1".

**12.** Procédé selon la revendication 11, dans lequel chaque pixel est entouré de pixels voisins, caractérisé en ce que le lissage consiste, pour chaque pixel à l'exception de ceux des deux premières lignes et des deux dernières lignes d'une trame et à l'exception des deux premiers et des deux derniers pixels de chaque ligne, en :

- une décomposition du voisinage constitué par les vingt-quatre premiers voisins du pixel considéré, en neuf domaines carrés de neuf pixels chacun et contenant le pixel considéré,
- chaque domaine ayant une étendue, cette étendue étant égale à la différence entre la plus grande valeur numérique et la plus faible valeur numérique représentant les états des pixels du domaine considéré, un calcul, excepté pour le domaine ayant le pixel considéré en son centre, de l'étendue des huit domaines restants,
- pour le domaine de plus faible étendue, un calcul de la moyenne des valeurs numériques représentant l'état des pixels,
- pour le pixel considéré, un remplacement de la valeur numérique de son état d'éclairement par la moyenne calculée précédemment.

13. Procédé selon la revendication 11, caractérisé en ce qu'il consiste à :
- coder sur 1 bit le nombre zéro correspondant à une longueur nulle de plage de pixel de niveau "0" séparant deux pixels de niveau "1", successifs,
- coder sur deux bits les nombres correspondant à des longueurs de plage supérieures à 63 pixels de niveau "0" séparant deux pixels de niveau "1" successifs,
- coder sur huit bits les nombres correspondant à des longueurs de plage de pixels de niveau "0" séparant deux pixels de niveau "1" allant de 1 à 63.

**Patentansprüche**

1. Einrichtung zur Wiedergabe der Relativbewegung eines ersten Körpers (10) in Bezug auf einen zweiten Körper (12), umfassend:
   - eine Videokamera (20), die von dem zweiten Körper getragen wird, auf den ersten Körper gerichtet ist und an einem Ausgang ein Videosignal und ein Synchronisationssignal liefert, weiterhin **gekennzeichnet durch**
   - mindestens ein Visiermuster (14), das von dem ersten Körper getragen wird und geometrische Figuren mit geradlinigen Konturen aufweist, die abwechselnd Licht reflektieren (16) und absorbieren (18),
   - eine Blitzlampe (22), die von dem zweiten Körper getragen wird,
   - einen elektronischen Schaltkreis für die Auslösung (24) der Blitzlampe (22), wobei der Schaltkreis (24) das Synchronisationssignal empfängt und auf seinem Ausgang, der mit den Anschlüssen der Blitzlampe (22) verbunden ist, ein Auslösesignal für diese Lampe ausgibt,
   - eine elektronische Einrichtung (26) zur Verarbeitung der Videosignale, die durch einen Eingang mit dem Ausgang der Videokamera (20) verbunden ist, wobei die Einrichtung (26) eine Analog/Digital-Umwandlung, eine Kompression und eine Kodierung des Videosignals sicherstellt und ein kodiertes Signal auf einen ersten Ausgang und ein Steuersignal auf einem Ausgang ausgeht, der mit einem Eingang des elektronischen Auslöseschaltkreises (24) verbunden ist,
   - eine Übertragungseinrichtung (28) für die kodierten Signale, die mit einem Eingang an den ersten Ausgang der elektronischen Einrichtung zur Verarbeitung (26) angeschlossen ist,
   - eine Einrichtung (30) zum Analysieren, Behandeln und Anzeigen des übertragenen kodierten Signals, die über einen Eingang mit dem Ausgang der Einrichtungen zum Übertragen (28) verbunden ist.

2. Einrichtung nach Anspruch 1, **dadurch gekennzeichnet, daß** das digitale Signal komprimiert und kodiert ist in einer Weise, daß es mit einer Rate von weniger als 500 kbit/s übertragen werden kann.

3. Einrichtung nach Anspruch 2, **dadurch gekennzeichnet, daß** das digitale Signal komprimiert und kodiert ist in einer Weise, daß es mit einer Rate gleich 400 kbit/s übertragen werden kann.

4. Einrichtung nach Anspruch 1, **dadurch gekennzeichnet, daß** das Visiermuster (14) ein Schachbrettmuster ist.

5. Einrichtung nach Anspruch 1, **dadurch gekennzeichnet, daß** die reflektierenden Figuren (16) aus retroreflektierendem Papier ausgeführt sind.

6. Einrichtung nach Anspruch 1, **dadurch gekennzeichnet, daß** die Übertragungseinrichtung (28) umfaßt:

- eine Sendeeinrichtung (28A), welche umfaßt: einen elektronischen Schaltkreis (282) zur Bildung und Modulation des kodierten Signals, wobei der Schaltkreis (282) auf einem Ausgang ein Signal ausgibt, das mittels einer Radiofrequenzwelle übertragen werden kann,

einen Sender (284), der mit einem Eingang an den Ausgang des elektronischen Schaltkreises zur Bildung und Modulation (282) angeschlossen ist und ein Antennennetz (286) umfaßt,

eine Empfangseinrichtung (28B), die eine Antenne (288) und einen elektronischen Modulationsschaltkreis (290) umfaßt.

7. Einrichtung nach Anspruch 1, bei welcher die Kamera ein Videosignal entsprechend den Linienrastern ausgibt, wobei die Linien aus Pixel bestehen, **dadurch gekennzeichnet, daß** die elektronische Einrichtung (26) zur Verarbeitung des Videosignals gleichzeitig die analog/digital Umwandlung, eine Abtastung des Signals, eine Abtastung, die nur jedes zweite Raster und jeden zweiten Pixel erhält, sicherstellt.

8. Einrichtung nach Anspruch 1, **dadurch gekennzeichnet, daß** die Blitzlampe (22) nahe der Videokamera (22) angeordnet ist.

9. Verfahren zur Wiedergabe der Relativbewegung eines ersten Körpers (10) in Bezug auf einen zweiten Körper (12) zur Verwendung in der Einrichtung nach Anspruch 1, umfassend die Mitnahme einer Videokamera (20) auf einem zweiten Körper (12), die auf einen ersten Körper (10) gerichtet ist und auf einem Ausgang ein Videosignal und ein Synchronisationssignal liefert, weiterhin **gekennzeichnet durch**
   - Mitnahme eines Visiermusters (14) auf dem ersten Körper (10), das geometrische Figuren mit geradlinigen Konturen, die abwechselnd Licht reflektieren (16) und absorbieren (18), umfaßt,
   - Mitnahme einer Blitzlampe (22) auf dem zweiten Körper (12),
   - Vorsehen eines elektronischen Schaltkreises (24) zur Auslösung der Blitzlampe (22), wobei der Schaltkreis (24) das Synchronisationssignal empfängt und auf einem Ausgang, der mit den Anschlüssen der Blitzlampe (22) verbunden ist, ein Auslösesignal für diese Lampe ausgibt,
   - Vorsehen einer elektronischen Einrichtung (26) zur Verarbeitung der Videosignale, die durch einen Eingang mit dem Ausgang der Videokamera (20) verbunden ist, wobei die Einrichtung (26) eine analog/digital Umwandlung, eine Kompression und eine Kodierung des Videosignals sicherstellt und ein kodiertes Signal auf einem ersten Ausgang ausgibt und ein Steuersignal auf einem Ausgang ausgibt, der mit einem Eingang des elektronischen Auslöseschaltkreises (24) verbunden ist,
   - Vorsehen einer Einrichtung (28) zur Übertragung des kodierten Signals, die über einen Eingang mit dem ersten Ausgang der elektronischen Einrichtung zur Verarbeitung (26) verbunden ist,
   - Vorsehen einer Einrichtung (30) zum Analysieren, Verarbeiten und Anzeigen des übertragenen kodierten Signals, die mit einem Eingang an einen Ausgang der Übertragungseinrichtung (28) angeschlossen ist.

10. Verfahren nach Anspruch 9, **dadurch gekennzeichnet, daß** die Kompression in Realzeit eine Extraktion der Bildkonturen, die von der Videokamera (20) gebildet werden, umfaßt.

11. Verfahren nach Anspruch 9, in welchem das Videosignal dem Linienraster entspricht, wobei die Linien aus Pixel gebildet sind, und wobei das Videosignal nach der Digitalisierung die digitalen Werte umfaßt, welche den erleuchteten Zustand angeben, d. h. die Graustufen der Pixel, **dadurch gekennzeichnet, daß** die Kompressionen des digitalen Videosignals umfaßt:
   - Ausführen einer Auslesung (122) des Videosignals,
   - für jedes Pixel Berechnung eines Gradienten (124) zwischen dem digitalen Wert, welcher das betrachtete Pixel wiedergibt, und den digitalen Werten, die die Nachbarpixel wiedergeben,
   - Zuordnen eines Pegels "1" für jedes Pixel, dessen zuvor berechneter Gradient größer als eine gegebene Schwelle ist, und Pegel "0" andernfalls, wobei das Videosignal eine Folge von zugeordneten Pixeln mit ihrem jeweiligen Pegel umfaßt, einen Bereich von Pixel mit Pegel "0", der zwei Pixel mit "1" Pegel trennt, wobei die Kodierung besteht aus der Ersetzung der Folge von Pixeln mit ihren jeweiligen Pegeln durch eine Folge von Längen der Bereiche der Pixel mit Pegel "0", die zwei Pixel mit Pegel "1" trennen.

12. Verfahren nach Anspruch 11, in welchem jedes Pixel von Nachbarpixeln umgeben ist, **dadurch gekennzeichnet, daß** das Auslesen für jeden Pixel mit Ausnahme derjenigen der ersten zwei Zeilen und der letzten zwei Zeilen eines Rasters und mit Ausnahme der zwei ersten und der zwei letzten Pixel jeder Zeile umfaßt:

- eine Zerlegung der Nachbarschaft, die durch die vierundzwanzig ersten Nachbarn des betrachteten Pixels gebildet wird, in neun quadratische Bereiche von jeweils neun Pixeln, worin das betrachtete Pixel enthalten ist,
- jeder Bereich eine Ausdehnung aufweist, wobei diese Ausdehnung gleich der Differenz zwischen dem größten numerischen Wert und dem kleinsten numerischen Wert ist, und die Zustände der Pixel des betrachteten Bereiches wiedergibt, eine Berechnung der Ausdehnung - mit Ausnahme des Bereiches, der das betrachtete Pixels im Zentrum ausfweist - der acht verbleibenden Bereiche,
- für den Bereich der geringsten Ausdehnung, eine Berechnung des Mittels der digitalen Werte, die den Zustand der Pixel wiedergeben,
- für das betrachtete Pixel die Ersetzung der numerischen Werte seines Beleuchtungszustandes durch den zuvor berechneten Mittelwert.

13. Verfahren nach Anspruch 11, **dadurch gekennzeichnet, daß** es umfaßt:
- Kodieren auf 1 Bit der Zahl Null entsprechend der Länge Null des Bereiches der Pixel mit Pegel "0", die zwei Pixel mit Pegel "1" trennen, anschließend
- Kodieren auf zwei Bit der beiden Zahlen entsprechend den Längen der Bereiche oberhalb von 63 Pixeln mit dem Pegel "0", die zwei Pixel "1" trennen, anschließend
- Kodieren der acht Bits der Zahlen, die von 1 bis 63 gehen, entsprechend den Längen der Bereiche der Pixel mit Pegel "0", die zwei Pixel mit Pegel "1" trennen.

## Claims

1. Means for restoring the relative movement of a first body (10) with respect to a second body (12), comprising:
   - a video camera (20) mounted on the second body, pointing towards the first body and providing a video output signal and a synchronisation signal, characterised in that it also comprises:
   - at least one target (14) borne by the first body and comprising geometrical patterns having a rectilinear perimeter which alternately reflect (16) and absorb (18) light,
   - a strobe light (22), borne on the second body, and
   - an electronic circuit (24) triggering the strobe light (22), this circuit (24) receiving the said synchronisation signal and providing a trigger signal for the lamp from an output connected to the terminals of the strobe lamp (22),
   - an electronic unit (26) for processing the video signal connected via one input to the output of the video camera (20), this unit (26) performing analog/digital conversion, compression and coding of the video signal and outputting a coded signal to a first output and outputting a control signal to an output connected to an input to the electronic triggering circuit (24),
   - means (28) for transmission of the coded signal connected by an input to the first output of the electronic processing unit (26),
   - means (30) for analysing, processing and displaying the coded signal transmitted, relayed by an input to an output of the transmission means (28).

2. Means according to claim 1, characterised in that the digital signal is compressed and coded in such a way that it can be transmitted at a rate of less than 500 kbits/s.

3. Means according to claim 2, characterised in that the digital signal is compressed and coded in such a way as to be capable of being transmitted at a rate of 400 kbits/s.

4. Means according to claim 1, characterised in that the target (14) is chequered.

5. Means according to claim 1, characterised in that the reflecting patterns (16) are constructed using reflecting paper.

6. Means according to claim 1, characterised in that the transmission means (28) comprise:
   - emission means (28A) comprising:
   . an electronic circuit (282) for shaping and modulating the coded signal, this circuit (282) producing a signal at an output which can be transmitted by means of a radio frequency wave,
   . en emitter (284) connected by one input to the output of the electronic shaping and modulating circuit (282) and comprising a system of antennae (286),
. receiver means (28B) comprising at least one antennae (288) and an electronic demodulating circuit (290).

7. Means according to claim 1, the camera producing a video signal corresponding to rasters of lines, these lines comprising pixels, characterised in that the electronic unit (26) processing the video signal effects sampling of the said signal at the same time as the analog/digital conversion, a sampling which retains only every other raster and every other pixel.

8. Means according to claim 1, characterised in that the strobe light (22), is located close to the video camera (20).

9. A method for restoring the relative movement of a first body (10) with respect to a second body (12) using the means according to claim 1, comprising of mounting a video camera (20) on the second body (12) pointing towards the first body (10) and delivering a video signal and a synchronisation signal at an output, characterised by the fact that it also comprises:
   - at least one target (14) comprising geometrical patterns with a rectilinear perimeter which alternately reflect (16) and absorb (18) light, mounted on the first body (10),
   - a strobe lamp (22) mounted on the second body (12),
   - an electronic circuit (24) for triggering the strobe lamp (22), this circuit (24) receiving the said synchronisation signal and delivering a triggering signal for the lamp at an output connected to the terminals of the strobe lamp (22),
   - an electronic unit (26) for processing the video signal connected by one input to the output of the video camera (20), this unit (26) effecting analog/digital conversion, compression and coding of the video signal and delivering a coded signal to a first output and delivering a control signal to an output connected to an input of the electronic triggering circuit (24),
   - means (28) for transmitting the coded signal connected by one input to the first output of the electronic processing unit (26),
   - and means (30) for analysing, processing and displaying the coded signal transmitted, relayed by one input to an output from the transmission means (28).

10. Means according to claim 9, characterised in that compression consists of extracting the contours of images formed by the video camera (20) in real time.

11. A method according to claim 9, in which the video signal corresponds to rasters of lines, the lines consisting of pixels, the video signal after digitisation containing numerical values representing states of illumination, i.e. the grey levels of the pixels, characterised in that compression of the digital video signal comprises:
   - performing a smoothing (122) of the video signal,
   - calculating a gradient (124) for each pixel between the digital value representing the state of the pixel in question and the digital values representing the state of adjacent pixels,
   - allocating a level "1" to every pixel for which the gradient calculated above is greater than a given threshold or a level "0" if it is not, and in that where the video signal contains a sequence of pixels labelled with their corresponding levels, with a run of pixels of level "0" separating two pixels of level "1", coding consists of replacing the sequence of pixels allocated with their corresponding levels by a sequence of the lengths of runs of pixels of level "0" separating two pixels of level "1".

12. A method according to claim 11, in which each pixel is surrounded by adjacent pixels, characterised in that for each pixel with the exception of those in the first two lines and the last two lines of a raster and with the exception of the first two pixels and the last two pixels in each line the smoothing consists of:
   - subdividing the neighbourhood comprising the twenty four closest neighbours of the pixel in question into nine square domains of nine pixels each containing the pixel in question,
   - where each domain has an extent, this extent being equal to the difference between the greatest digital value and the smallest digital value representing the states of the pixels in the domain in question, calculating the extent of the eight remaining domains, except for the domain having the pixel in question at its center,
   - for the domain of smallest extent, calculating the mean of the digital values representing the state of the pixels,
   - for the pixel in question, replacing the numerical value of its illumination state by the mean calculated above.

13. A method according to claim 11, characterised in that it comprises:
- coding the number zero corresponding to a zero run of pixels of level "0" separating two successive pixels of level "1" using 1 bit,
- coding the numbers corresponding to the runs greater than 63 pixels of level "0" separating two successive pixels of level "1" using two bits,
- coding the numbers corresponding to runs of pixels of level "0" separating two pixels of level "1" from 1 to 63 using eight bits.

FIG. 1

100

110

120

130

140

150

FIG. 2

120    110

122

124

126

130

FIG. 3

110    122

1221

1222

1223

124

FIG. 4

FIG. 5

FIG. 6

FIG. 7

FIG. 8